# EUROPEAN PATENT SPECIFICATION

(11) **EP 3 402 731 B1**
(45) Date of publication and mention of the grant of the patent: **15.01.2020**
(21) Application number: 16797523.4
(22) Date of filing: 15.11.2016
(51) Int. Cl.: B65G 43/10, B65G 1/04, B65G 1/06, B65G 47/57

(54) **A STORAGE SYSTEM FOR STORING AND TRANSPORTING BINS**
LAGERSYSTEM FÜR DIE LAGERUNG UND DEN TRANSPORT VON BEHÄLTERN
SYSTÈME DE STOCKAGE POUR STOCKER ET TRANSPORTER DES CASIERS

(30) Priority: 14.01.2016 NO 20160070
(43) Date of publication of application: 21.11.2018
(73) Proprietor: Autostore Technology AS, 5578 Nedre Vats (NO)
(72) Inventor: HOGNALAND, Ingvar, 5578 Nedre Vats (NO); FJELDHEIM, Ivar, 5533 Haugesund (NO); AUSTRHEIM, Trond, 5590 Etne (NO); GJERDEVIK, Øystein, 5574 Skjold (NO)
(74) Representative: Onsagers AS
(86) International application number: PCT/EP2016/077691
(87) International publication number: WO 2017/121515

(56) References cited:
- WO-A1-2014/075937
- DE-A1- 19 925 157
- DE-A1-102014 007 228
- JP-A- H01 303 212
- US-A- 5 135 344
- US-A- 5 171 120
- US-A1- 2014 277 693

## Description

### TECHNICAL FIELD

The present invention relates to the field of automated logistics and storage systems. More specifically the invention relates to a system and method for effectively storing and transporting boxes from one location to another.

### BACKGROUND

The applicant's already known AutoStore © system is a storage system comprising a three dimensional storage grid wherein storage bins are stacked on top of each other to a certain height.

The document WO 2014/075937 A1 discloses a storage system according to the preamble of claim 1, and a method for storing and transporting a plurality of storage bins according to the preamble of claim 5. The storage grid is constructed as aluminium columns interconnected by top rails. A number of self-driven robot vehicles are moving horizontally on rails arranged on the top of the storage grid.

Each vehicle is equipped with hoisting gear for picking up, carrying, and placing bins that are stored in columns of the storage grid. Each bin may hold different types of articles.

The system also comprises delivery and/or supply stations, where one or several articles are picked out from a storage bin or where one or several items are filled into a storage bin.

When an article is to be retrieved from a bin, the robot vehicle is arranged to pick up the storage bin containing the article and transport it to a bin lift device. The bin lift device will transport the storage bin to a delivery station, where the article is retrieved from the storage bin. The storage bin, typically having remaining articles, is thereafter returned to the storage grid by means of the bin lift device and a robot vehicle.

The same procedure is used for refilling and storing items into the storage grid. First, items are filled into a storage bin at a supply station, normally at the same location as the delivery station. The bin lift device is then lifting the storage bin up to the upper level where a robot vehicle is transporting the storage bin into its destination in the storage grid.

A storage control and communication system may be used to monitor inventory, location of storage bins (within the storage grid and/or during transport), charge level of robot vehicles, etc. The storage control and communication system may further be provided with communication means for controlling the traffic of robot vehicles in order to avoid collision.

During busy periods several robot vehicles will operate simultaneously. One or more robots will then likely have to wait near the lift device before the lift is ready to be loaded or unloaded with a specific bin for delivery from or to a supply station. This will degrade the efficiency of the storage system.

This can be addressed by installing several lifts operating simultaneously. Such a configuration will however result in an undesired increase in system complexity, and each additional lift will occupy at least two columns of the storage grid, thereby reducing the available space.

Hence, it is an object of the present invention to provide a more time and cost efficient storage system.

### SHORT DESCRIPTION OF THE INVENTION

The present invention is set forth and characterized in the independent claims 1 and 5.

The present invention comprises a storage system for storing and transporting a plurality of storage bins to and from an upper and a lower location of a three dimensional storage grid which is constructed by columns interconnected by top rails, such as stated in claim 1.

The system comprises a movable continuous chain running from the upper location to the lower location of said storage grid. The chain comprises compartments fitted for holding the bins.

The system further comprises robot vehicles running on the upper location of the storage grid, said vehicles are adapted for loading and unloading bins from the compartments in the chain.

A control system is adapted for controlling the loading and unloading of the bins from the compartments in the chain.

Further features and embodiments of the system are defined in the claims.

The invention is also defined by a method for storing and transporting a plurality of storage bins to and from an upper and a lower location of a three dimensional storage grid constructed by columns interconnected by top rails, such as stated in claim 5.

The method is characterised by providing a movable chain running from the upper to the lower location of said storage grid, and fitting said chain with compartments for holding the bins.

The method is further characterised by providing robot vehicles for running on the upper location of the storage grid, loading and unloading bins from the compartments in the chain by means of said vehicles.

A control system is then provided for controlling the loading and unloading of the bins to and from the compartments in the chain.

Further features of the method are defined in the claims.

### DETAILED DESCRIPTION

The invention will now be described in detail with reference to the figures, where:
Fig. 1 shows an illustration of a storage grid comprising a transporting system according to the present invention, and
Fig. 2 shows lift device installed in the storage grid where the lift device comprises a chain of compartments for holding bins.

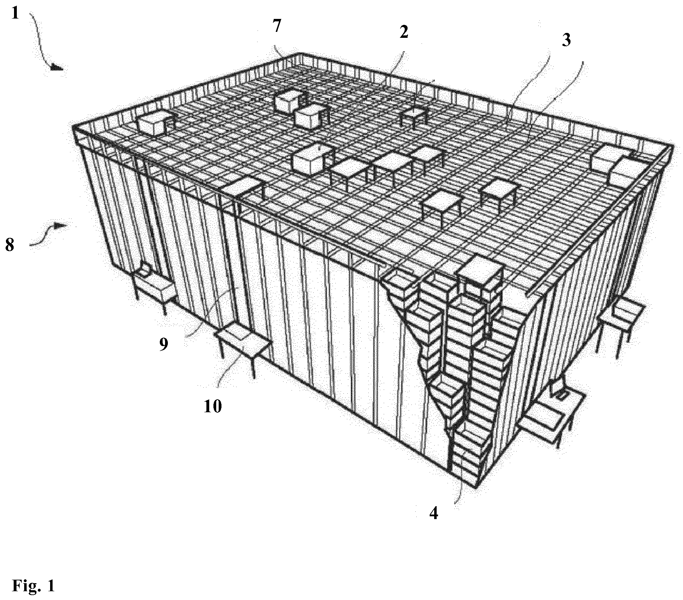

Figure 1 shows the storage and transporting system 1 for storing and transporting a plurality of storage bins 4 to and from an upper and a lower location of a three dimensional storage grid 8 constructed by columns interconnected by top rails.

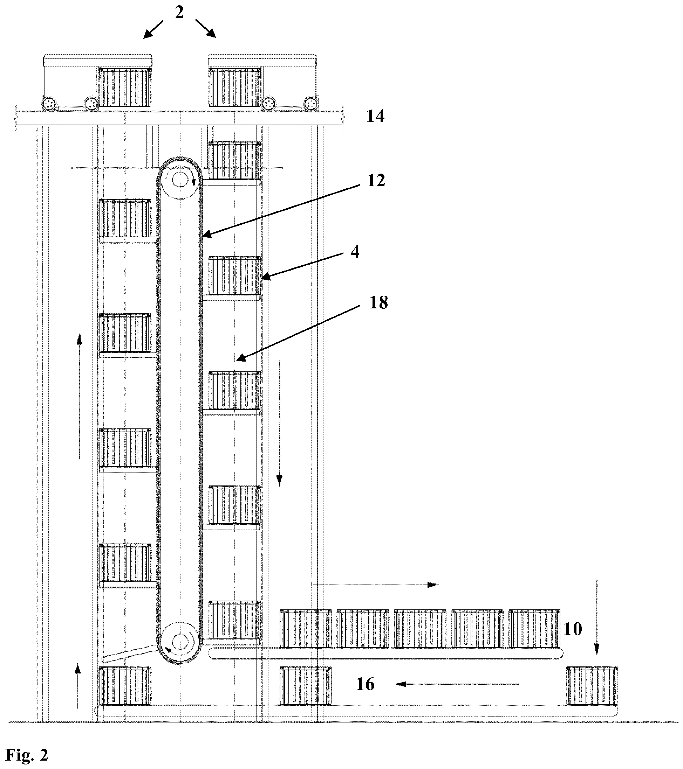

The system 1 comprises a plurality of robot vehicles 2 configured to move on dedicated supporting rails 3 and to receive a storage bin 4 from a storage column 7 within a bin storage grid 8. The system 1 has a dedicated bin lift device, shown in figure 2, comprising a movable continuous chain 12 with compartments 18 fitted for holding bins 4. Each compartment 18 is arranged to receive a storage bin 4 from a robot vehicle 2 operating at the top level of the storage system 1 and to convey the storage bin 4 down in a vertical direction to a supply station 10. The robot vehicle 2 retrieves a storage bin 4 by using a lifting frame connected to the robot vehicle 2 by a wire or belt. The lifting frame comprises attachment means for connection to a storage bin 4.

The movable continuous chain 12 comprising the compartments 18 is running from a upper location 14 to a lower location 16 of said storage grid 8.

In one embodiment the continuous chain 12 run continuously in the same direction for loading and unloading bins 4 to and from a supply station 10. In another embodiment the chain 12 may be controlled to adjust its speed and direction based on control signals. The arrows pointing upward and downwards in figure 2 indicates a direction of the chain 12. Bins 4 that are placed in compartments 18 moving upwards are to be picked up and stored by means of a robot vehicle 2, and bins 4 in compartments 18 moving downwards contain bins with articles to be delivered at the supply station 10.

In one embodiment, the continuous movable chain 12 is installed in two columns of the storage grid 8. In another embodiment it is installed in three columns. Driving gear for driving the chain 12 can then be constructed more robust, and each bin can be loaded with more weight.

The system further comprises at least one, preferably several, robot vehicles 2 running on the upper location of the storage grid 8. These vehicles 2 are adapted for loading and unloading bins 4 from the compartments 18 in the chain.

The full potential of the invention is realized when several robot vehicles 2 are used during a period with heavy demand for articles stored in bins 4, or articles to be stored in bins 4.

The interaction between the movable continuous chain 12 and the robot vehicles 2 has to be controlled. The storage system 1 therefor further comprises a control system adapted for controlling the loading and unloading of the bins 4 to and from the compartments 18 in the chain.

This interaction requires very precise information of the location of each robot vehicle 2 relative to each compartment 18 of the chain.

According to the invention this is achieved by equipping the system 1 with detecting means for detecting the position of the compartments 18 of the movable chain relative to the upper location on the storage grid 8 where bins 4 are loaded or unloaded. Different types of sensor may be used for this purpose, e.g. optical or magnetic sensors.

The upper location on the storage grid 8 is where the robot vehicles 2 are operating. When an article is ordered, the bin 4 holding the article will be picked up by a mobile vehicle 2 and placed in a compartment 18 of the chain 12. This action has to be synchronised such that the bin 4 is placed in the compartment 18 only when the compartment 18 is fully exposed, i.e. open.

According to the invention, the storage system 1 comprises a master control system connected to a first control system controlling the movements and actions of each robot vehicle 2. It is further connected to a second control system controlling the movements of the movable chain. In this way the master control system has information about the location and speed of each mobile vehicle 2 as well as the movements of the chain with compartments 18.

The master control system will adjust the speed of the continuous chain according to current speeds and locations of robot vehicles 2 picking up or delivering bins 4 to and from compartments 18 of the chain. The traffic of robot vehicles 2 is determined by current demand of articles related to storing and ordering.

The master control system may also override the control system of the robot vehicles 2 for optimizing and synchronising movements of the vehicles 2 relative to speed of the chain and the position of compartments 18 ready to be loaded or unloaded.

For optimal utilization of the capacity of the storage system 1, the master control system is connected to a sensor detecting the position of a compartment 18 relative to the upper location on the storage grid 8. The master control system can then control the speed of the movable chain relative to the positions of the robot vehicles 2 loading or unloading bins 4 to and from compartment 18 of the chain. In this way optimal speed of loading/unloading and utilization of each compartment 18 in the movable chain will be provided.

The master control system is connected to several other control systems. As already mentioned, it is connected to a first control system controlling the movements and actions of each robot vehicle 2, and a second control system controlling the movements of the movable chain 12. It is further connected to a storage control and communication system monitoring inventory of, and location of storage bins 4 within the storage grid 8.

Software running on the master control system will receive input from all systems connected to the master system and based in such input data control the movements of the continuous chain for optimal efficiency of transporting bins 4 to and from a delivery/supply station.

As a first alternative, the robot vehicle 2 running on the top of the storage grid 8 comprises a hoisting gear, for picking up, carrying, and placing bins 4, that is located on the side of the main body of the vehicle 2. This construction will cover the area of two columns. When such a vehicle 2 is to load/unload a bin 4 to and from a compartment 18 of the chain, the main body of the vehicle 2 will have to be positioned on top of a row next to a row carrying the continuous chain with the compartments 18.

As a second alternative requiring less area, the robot vehicle comprises a hoisting gear that is integrated in the main body of the robot vehicle 2. This construction will cover the area of one column. When such a vehicle 2 is to load or unload a bin 4 to and from a compartment 18 of the chain, the main body of the vehicle 2 will have to be positioned on top of a row carrying the continuous chain with the compartments 18. A vehicle 2 covering the area of only one column will provide a more flexible solution where other vehicles 2 will have access to all columns next to a vehicle 2.

Both type of robot vehicle 2 may operate in the storage system 1 according to the invention, including a mix of these.

In a fully operating system according to the present invention, the speed, start and stop of the continuous chain will be adjusted according to locations of the robot vehicles 2 picking up and delivering bins 4.

By reducing the number of bin lift devices used in the storage system to a minimum and even increasing the capacity of delivering and retrieving bins to and from a supply station, the present invention provides a solution that is faster and more cost efficient than prior solutions.

## Claims

1. A storage system (1) for storing and transporting a plurality of storage bins (4) to and from an upper location (14) and a lower location (16) of a three dimensional storage grid (8) constructed by columns interconnected by top rails, the storage system (1) comprising the three dimensional storage grid (8), **characterized in** further comprising:
- a movable continuous chain (12) running from the upper location (14) to the lower location (16) of said storage grid (8), said chain (12) comprises compartments (18) fitted for holding the bins (4);
- robot vehicles (2), running on the top of the storage grid (8), and comprising a hoisting gear for picking up, carrying, and placing bins (4) that is located on the side of the main body of the vehicle (2) or is integrated in the main body of the robot vehicle (2) for loading and unloading bins (4) to and from the compartments (18) in the continuous chain (12);
- a sensor for detecting the position of the compartments (18) of the movable chain (12) relative to the upper location on the storage grid (8) where bins (4) are loaded or unloaded;
- a control system for controlling the loading and unloading of the bins (4) from the compartments (18) in the chain (12), the control system comprises a master controller connected to a first and second control system, said first control system controlling the movements and actions of each robot vehicle (2), and said second control system controlling the movable chain (12), and where the master controller is connected to said sensor for detecting the position of the compartments (18) relative to the upper location on the storage grid, and is adapted for controlling the speed of the movable chain (12) relative to the positions of the robot vehicles (2), based on information about the location and speed of each mobile vehicle (2) as well as the movements of the chain with compartments (18), for adjusting the speed of the continuous chain according to current speeds and locations of robot vehicles (2) picking up or delivering bins 4 to and from compartments (18) of the chain for providing optimal speed of loading/unloading and utilization of each compartment (18) in the movable chain.

2. The storage system (1) according to claim 1, where the movable chain (12) is installed in two columns of the storage grid (8).

3. The storage system (1) according to claim 1, where the movable chain (12) is installed in three columns of the storage grid (8).

4. The storage system (1) according to any of the previous claims, further comprising software running on the master control system for receiving input from all systems connected to the master system and based on such input data, control the movements of the continuous chain for optimal efficiency of transporting bins (4) to and from a delivery or supply station.

5. A method for storing and transporting a plurality of storage bins (4) to and from an upper location (14) and lower location (16) of a three dimensional storage grid (8) constructed by columns interconnected by top rails, **characterized in**:
- providing a movable continuous chain (12) running from the upper location (14) to the lower location (16) of said storage grid (8), and fitting said chain (12) with compartments (18) for holding the bins (4);
- providing robot vehicles (2) for running on the top of the storage grid (8), comprising a hoisting gear, for picking up, carrying, and placing bins (4), that is located on the side of the main body of the vehicle (2) or is integrated in the main body of the robot vehicle (2) for loading and unloading bins (4) to and from the compartments (18) in the continuous chain (12);
- providing a sensor for detecting the position of the compartments (18) of the movable chain (12) relative to the upper location on the storage grid (8) where bins (4) are loaded or unloaded;
- providing a control system, comprising a master controller system connected to a first control system controlling the movements and actions of each robot vehicle (2), and second control system controlling the movements of the movable chain (12);
- letting the master controller control the first controller controlling the movements and actions of each robot vehicle (2), and the second controller controlling the movable chain (12); connecting the master controller to the sensor for detecting the position of the compartments (18) of the movable chain relative to the upper location of the storage grid, and letting the master controller control the speed of the movable chain (12) relative to the positions of the robot vehicles (2), based on information about the location and speed of each mobile vehicle (2) as well as the movements of the chain with compartments (18), for adjusting the speed of the continuous chain according to current speeds and locations of robot vehicles (2) picking up or delivering bins 4 to and from compartments (18) of the chain, for providing optimal speed of loading/unloading and utilization of each compartment (18) in the movable chain.

6. The method according to claim 5, by letting the storage system operate autonomously.

## Patentansprüche

1. Lagersystem (1) zum Lagern und Transportieren einer Vielzahl von Lagerbehältern (4) zu und von einer oberen Position (14) und einer unteren Position (16) eines dreidimensionalen Lagergitters (8), das aus Stützen konstruiert ist, die durch obere Schienen miteinander verbunden sind, wobei das Lagersystem (1) das dreidimensionale Lagergitter (8) umfasst, **dadurch gekennzeichnet,** das es des Weiteren umfasst:
eine einzelne bewegliche fortlaufende Kette (12), die von der oberen Position (14) zu der unteren Position (16) des Lagergitters (8) läuft, wobei die Kette (12) Fächer (18) umfasst, die dazu ausgelegt sind, die Behälter (4) zu halten;
Roboterfahrzeuge (2), die auf der Oberseite des Lagergitters (8) fahren und ein Hubwerk zum Aufnehmen, Transportieren und Platzieren von Behältern (4) umfassen, das an einer Seite des Hauptkörpers des Fahrzeugs (2) angeordnet oder in den Hauptkörper des Roboterfahrzeugs (2) integriert ist, um Behälter (4) in die Fächer (18) in der fortlaufenden Kette (12) zu laden und daraus zu entladen;
einen Sensor zum Ermitteln der Position des Fachs (18) der beweglichen Kette (12) relativ zu der oberen Position auf dem Lagergitter (8), wo Behälter (4) geladen oder entladen werden;
ein Steuersystem zum Steuern des Ladens und Entladens der Behälter (4) aus den Fächern (18) in der Kette (12), wobei das Steuersystem eine Hauptsteuerung umfasst, die mit einem ersten und zweiten Steuersystem verbunden ist, wobei das erste Steuersystem die Bewegungen und Aktionen der einzelnen Roboterfahrzeuge (2) steuert und das zweite Steuersystem die bewegliche Kette (12) steuert, und wobei die Hauptsteuerung mit dem Sensor verbunden ist, um die Position der Fächer (18) relativ zu der oberen Position auf dem Lagergitter zu ermitteln und dazu eingerichtet ist, die Geschwindigkeit der beweglichen Kette (12) relativ zu den Positionen der Roboterfahrzeuge (2) zu steuern, basierend auf Informationen über die Position und Geschwindigkeit der einzelnen mobilen Fahrzeuge (2) sowie die Bewegungen der Kette mit den Fächern (18), um die Geschwindigkeit der fortlaufenden Kette entsprechend den aktuellen Geschwindigkeiten und Positionen der Roboterfahrzeuge (2) anzupassen, welche die Behälter (4) in die Fächer (18) der Kette laden oder daraus aufnehmen, um eine optimale Geschwindigkeit für das Laden/Entladen und die Nutzung der einzelnen Fächer (18) in der beweglichen Kette bereitzustellen.

2. Lagersystem (1) nach Anspruch 1, wobei die bewegliche Kette (12) in zwei Stützen des Lagergitters (8) installiert ist.

3. Lagersystem (1) nach Anspruch 1, wobei die bewegliche Kette (12) in drei Stützen des Lagergitters (8) installiert ist.

4. Lagersystem (1) nach einem der vorhergehenden Ansprüche, des Weiteren umfassend Software, die auf dem Hauptsteuersystem läuft, um Eingaben von allen Systemen zu empfangen, die mit dem Hauptsystem verbunden sind und, basierend auf solchen Eingabedaten, die Bewegungen der fortlaufenden Kette für eine optimale Effizienz beim Transport der Behälter (4) zu und von einer Abgabe- oder Versorgungsstation zu steuern.

5. Verfahren zum Lagern und Transportieren einer Vielzahl von Lagerbehältern (4) zu und von einer oberen Position (14) und einer unteren Position (16) eines dreidimensionalen Lagergitters (8), das aus Stützen konstruiert ist, die durch obere Schienen miteinander verbunden sind, **gekennzeichnet durch**
Bereitstellen einer einzelnen beweglichen fortlaufenden Kette (12), die von der oberen Position (14) zu der unteren Position (16) des Lagergitters (8) läuft, und Ausstatten der Kette (12) mit Fächern (18) zum Halten der Behälter (4);
Bereitstellen von Roboterfahrzeugen (2), die auf der Oberseite des Lagergitters (8) fahren und ein Hubwerk zum Aufnehmen, Transportieren und Platzieren von Behältern (4) umfassen, das an einer Seite des Hauptkörpers des Fahrzeugs (2) angeordnet oder in den Hauptkörper des Roboterfahrzeugs (2) integriert ist, um Behälter (4) in die Fächer (18) in der fortlaufenden Kette (12) zu laden und daraus zu entladen;
Bereitstellen eines Sensors zum Ermitteln der Position des Fachs (18) der beweglichen Kette (12) relativ zu der oberen Position auf dem Lagergitter (8), wo Behälter (4) geladen oder entladen werden;
Bereitstellen eines Steuersystems, umfassend ein Hauptsteuersystem, das mit einem ersten Steuersystem verbunden ist, welches die Bewegungen und Aktionen der einzelnen Roboterfahrzeuge (2) steuert, und einem zweiten Steuersystem, das die Bewegungen der beweglichen Kette (12) steuert;
Ermöglichen, dass die Hauptsteuerung die erste Steuerung steuert, welche die Bewegungen und Aktionen der einzelnen Roboterfahrzeuge (2) steuert, und die zweite Steuerung, welche die bewegliche Kette (12) steuert;
Verbinden der Hauptsteuerung mit dem Sensor, um die Position der Fächer (18) der beweglichen Kette relativ zu der oberen Position des Lagergitters zu ermitteln, und Zulassen, dass die Hauptsteuerung die Geschwindigkeit der beweglichen Kette (12) relativ zu den Positionen der Roboterfahrzeuge (2) steuert, basierend auf Informationen über die Position und die Geschwindigkeit der einzelnen mobilen Fahrzeuge (2) sowie die Bewegungen der Kette mit den Fächern (18), um die Geschwindigkeit der fortlaufenden Kette entsprechend den aktuellen Geschwindigkeiten und Positionen der Roboterfahrzeuge (2) anzupassen, welche die Behälter (4) in die Fächer (18) der Kette laden oder daraus aufnehmen, um eine optimale Geschwindigkeit für das Laden/Entladen und die Nutzung der einzelnen Fächer (18) in der beweglichen Kette bereitzustellen.

6. Verfahren nach Anspruch 5, wobei zugelassen wird, dass das Lagersystem autonom arbeitet.

## Revendications

1. Système de stockage (1) pour stocker et transporter une pluralité de bacs de stockage (4) à et depuis un emplacement supérieur (14) et un emplacement inférieur (16) d'une grille de stockage tridimensionnelle (8) construite par des colonnes interconnectées par des traverses supérieures, le système de stockage (1) comprenant la grille de stockage tridimensionnelle (8) étant **caractérisé en ce qu'**il comprend en outre:
- une chaîne mobile continue (12) allant de l'emplacement supérieur (14) à l'emplacement inférieur (16) de ladite grille de stockage (8), ladite chaîne (12) comprenant des compartiments (18) adaptés pour tenir les bacs (4) ;
- des véhicules robotisés (2), se déplaçant sur le haut de la grille de stockage (8), et comprenant un dispositif de levage pour ramasser, transporter et placer les bacs (4) qui est situé sur le côté du corps principal du véhicule (2) ou est intégré dans le corps principal du véhicule robotisé (2) pour charger et décharger les bacs (4) à et depuis les compartiments (18) dans la chaîne continue (12) ;
- un capteur pour détecter la position des compartiments (18) de la chaîne mobile (12) par rapport à l'emplacement supérieur sur la grille de stockage (8) à laquelle les bacs (4) sont chargés ou déchargés ;
- un système de contrôle pour contrôler le chargement et le déchargement des bacs (4) depuis les compartiments (18) dans la chaîne (12), le système de contrôle comprenant un contrôleur principal raccordé à des premier et second systèmes de contrôle, ledit premier système de contrôle contrôlant les mouvements et actions de chaque véhicule robotisé (2), et ledit second système de contrôle contrôlant la chaîne mobile (12), et dans lequel le contrôleur principal est raccordé audit capteur pour détecter la position des compartiments (18) par rapport à l'emplacement supérieur de la grille de stockage, et est adapté pour contrôler la vitesse de la chaîne mobile (12) par rapport aux positions des véhicules robotisés (2), sur la base des informations sur l'emplacement et la vitesse de chaque véhicule mobile (2) ainsi que les mouvements de la chaîne avec les compartiments (18), pour ajuster la vitesse de la chaîne continue en fonction des vitesses et emplacements courants des véhicules robotisés (2) ramassant ou délivrant des bacs (4) à et à partir des compartiments (18) de la chaîne pour fournir une vitesse de chargement/déchargement et une utilisation optimales de chaque compartiment (18) dans la chaîne mobile.

2. Système de stockage (1) selon la revendication 1, dans lequel la chaîne mobile (12) est installée dans deux colonnes de la grille de stockage (8).

3. Système de stockage (1) selon la revendication 1, dans lequel la chaîne mobile (12) est installée dans trois colonnes de la grille de stockage (8).

4. Système de stockage (1) selon l'une quelconque des revendications précédentes, comprenant en outre un logiciel tournant sur le système de contrôle principal pour recevoir des données depuis tous les systèmes raccordés au système principal et, sur la base de telles données d'entrée, contrôler les mouvements de la chaîne continue pour une efficacité optimale de transport des bacs à et depuis un poste de réception ou de fourniture.

5. Procédé pour stocker et transporter une pluralité de bacs de stockage (4) à et depuis un emplacement supérieur (14) et un emplacement inférieur (16) d'une grille de stockage tridimensionnelle (8) construite par des colonnes interconnectées par des traverses supérieures, **caractérisé par** :
- la fourniture d'une chaîne mobile continue (12) se déplaçant depuis l'emplacement supérieur (14) jusqu'à l'emplacement inférieur (16) de ladite grille de stockage (8), et l'installation sur ladite chaîne (12) de compartiments (18) pour tenir les bacs (4) ;
- la fourniture de véhicules robotisés (2) qui se déplacent sur le haut de la grille de stockage (8), comprenant un dispositif de levage pour ramasser, transporter et placer les bacs (4), qui est situé sur le côté du corps principal du véhicule (2) ou est intégré dans le corps principal du véhicule robotisé (2) pour charger et décharger les bacs (4) à et depuis les compartiments (18) dans la chaîne continue (12) ;
- la fourniture d'un capteur pour détecter la position des compartiments (18) de la chaîne mobile (12) par rapport à l'emplacement supérieur sur la grille de stockage (8) où les bacs (4) sont chargés ou déchargés ;
- la fourniture d'un système de contrôle, comprenant un système de contrôleur principal raccordé à un premier système de contrôle contrôlant les mouvements et actions de chaque véhicule robotisé (2), et à un second système de contrôle contrôlant les mouvements de la chaîne mobile (12) ;
- le fait de laisser le contrôleur principal contrôler le premier contrôleur contrôlant les mouvements et actions de chaque véhicule robotisé (2), et le second contrôleur contrôlant la chaîne mobile (12) ;
- le raccordement du contrôleur principal au capteur pour détecter la position des compartiments (18) de la chaîne mobile par rapport à l'emplacement supérieur de la grille de stockage, et le fait de laisser le contrôleur principal contrôler la vitesse de la chaîne mobile (12) par rapport aux positions des véhicules robotisés (2), sur la base des informations sur l'emplacement et la vitesse de chaque véhicule mobile (2) ainsi que les mouvements de la chaîne avec les compartiments (18), pour ajuster la vitesse de la chaîne continue en fonction des vitesses et emplacements courants des véhicules robotisés (2) ramassant ou délivrant des bacs (4) à et à partir des compartiments (18) de la chaîne pour fournir une vitesse de chargement/déchargement et une utilisation optimales de chaque compartiment (18) dans la chaîne mobile.

6. Procédé selon la revendication 5, laissant le système de stockage opérer de façon autonome.
